# EUROPEAN PATENT SPECIFICATION

(11) **EP 4 481 291 B1**
(45) Date of publication and mention of the grant of the patent: **10.06.2026**
(21) Application number: 23756312.7
(22) Date of filing: 13.02.2023
(51) Int. Cl.: F24F 11/88, F24F 11/89, F24F 11/54, F24F 11/63, F24F 11/56, F24F 11/50, H04B 3/54, F24F 11/58

(54) **AIR-CONDITIONING SYSTEM**
KLIMAANLAGE
SYSTÈME DE CLIMATISATION

(30) Priority: 17.02.2022 JP 2022023020
(43) Date of publication of application: 25.12.2024
(73) Proprietor: DAIKIN INDUSTRIES, LTD., Osaka-shi, Osaka 530-0001 (JP)
(72) Inventor: YAMAMOTO, Ryosuke, Osaka-shi, Osaka 530-0001 (JP)
(74) Representative: Hoffmann Eitle
(86) International application number: PCT/JP2023/004702
(87) International publication number: WO 2023/157787

(56) References cited:
- WO-A1-2018/229976
- CN-A- 106 440 052
- JP-A- 2004 134 928
- JP-A- 2012 016 253
- JP-A- 2016 008 734
- JP-A- 2020 167 578
- US-A1- 2018 019 787

## Description

### TECHNICAL FIELD

The present invention relates to an air conditioning system including an air conditioner and an accessory device driven by power supplied from the air conditioner.

### BACKGROUND ART

In an air conditioner including a conventional outdoor unit and an indoor unit, for example, as described in Patent Literature 1 (JP 2020-167578 A), connection of devices may be confirmed and the devices may be communicated with each other by using a low frequency signal and a high frequency signal.

US 2018/019787 A1 discloses a communication device comprising a direct current power supply and a transmitter configured to transmit data by control of a current flowing through a current loop and discloses communication devices comprising a receiver configured to receive data by detection of the current flowing through the current loop.

### SUMMARY OF THE INVENTION

### <Technical Problem>

As described in Patent Literature 1, when a communication method used for a large device such as an outdoor unit and an indoor unit is applied to communication between an air conditioner and an accessory device, downsizing of the accessory device becomes difficult. Therefore, in a configuration in which communication and power supply are performed between the air conditioner and the accessory device by current loop communication using a power supply wiring, the size of an electric component for separating a power source and a communication signal and the like hinder downsizing of the accessory device.

An air conditioning system including an accessory device supplied with power from an air conditioner has a problem of downsizing the accessory device.

### <Solution to Problem>

An air conditioning system according to a first aspect of the invention includes an air conditioner, an accessory device driven by power supplied from the air conditioner, a power supply wiring, a first communication device, a second communication device, and a controller. The power supply wiring supplies power from the air conditioner to the accessory device. A first communication device changes a current flowing through the power supply wiring and performs current loop communication between the air conditioner and the accessory device. A second communication device superimposes a voltage signal on the power supply wiring and performs communication between the air conditioner and the accessory device. A controller controls the first communication device and the second communication device.

The air conditioning system according to the first aspect can use the current loop communication for recognizing the accessory device and use the voltage signal for data communication. In such an air conditioning system, as compared with a case where device recognition and data communication are performed only by the current loop communication, the components of the accessory device can be easily downsized, and the accessory device can be easily downsized.

An air conditioning system according to a second aspect is the system according to the first aspect, in which the current loop communication of the first communication device is performed by turning on and off the current flowing through the power supply wiring.

An air conditioning system according to a third aspect is the system according to the first or second aspect, in which a frequency of the voltage signal of the second communication device is higher than a frequency of the current loop communication of the first communication device.

The air conditioning system according to the third aspect can perform communication in which crosstalk is less likely to occur than the second communication device by using the first communication device, and can transfer more data faster than the first communication device by using the second communication device.

An air conditioning system according to a fourth aspect is the system according to any one of the first to third aspects, in which the controller configures a communication network by determining, using the current loop communication, that the accessory device is connected, and performs data communication by the voltage signal after the configuration of the communication network.

An air conditioning system according to a fifth aspect is the system according to the fourth aspect, in which by sequentially causing the second communication device to perform transmission and reception, the first communication device to perform transmission and reception, and the second communication device to perform transmission and reception between the air conditioner and the accessory device, the controller determines that the accessory device is connected, and configures the communication network.

In the air conditioning system according to the fifth aspect, since the voltage signals are transmitted and received before and after the current loop communication during the configuration of the communication network, it is possible to reliably determine the connection of the accessory device in shorter time compared to a case where only one of the communication is used.

An air conditioning system according to a sixth aspect is the system according to any one of the first to fifth aspects, in which the power supply wiring is a nonpolarized wiring.

In the air conditioning system according to the sixth aspect, since it is not necessary to specify the polarity when the power supply wiring is connected to the accessory device on site, the power supply wiring can be smoothly connected.

### BRIEF DESCRIPTION OF THE DRAWINGS

FIG. 1 is a conceptual diagram of an exemplary configuration of an air conditioning system according to an embodiment.
FIG. 2 is a block diagram illustrating a configuration related to communication between an indoor unit and an accessory device.
FIG. 3 is a flowchart for describing an operation related to communication between an air conditioner and the accessory device.
FIG. 4 is a timing chart for describing the operation related to communication between the air conditioner and the accessory device.
FIG. 5 is a conceptual diagram of an exemplary configuration of an air conditioning system according to a modification.

### DESCRIPTION OF EMBODIMENTS

### (1) Overall configuration

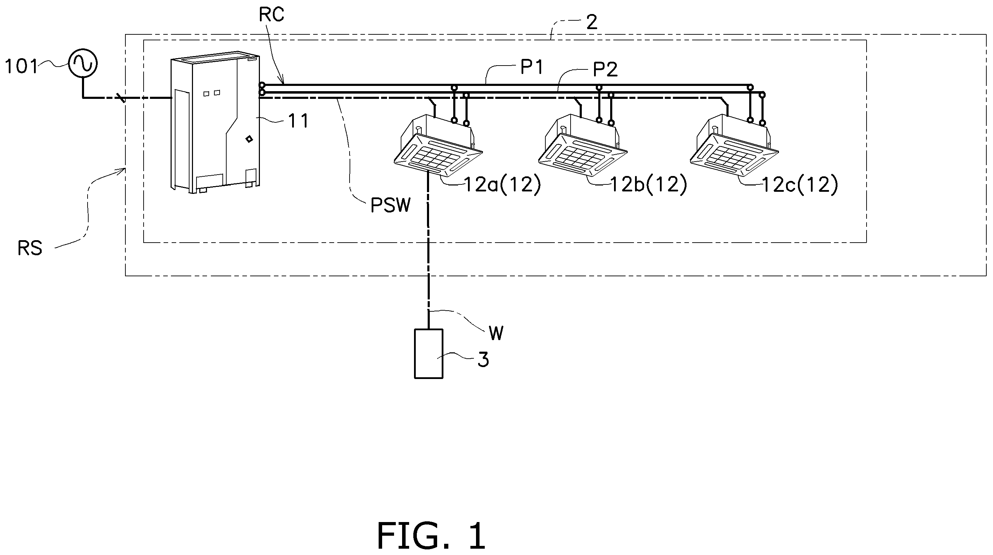

An air conditioning system 1 shown in FIG. 1 includes an air conditioner 2 and an accessory device 3. The air conditioner 2 includes an outdoor unit 11 and a plurality of indoor units 12. In the air conditioner 2, the outdoor unit 11 and the indoor units 12 are connected so as to be communicable with each other, to perform air conditioning of a target space. The indoor units 12 of the air conditioner 2 and the accessory device 3 are connected to be communicable with each other, and the accessory device 3 imparts a specific function to the air conditioner 2. The accessory device 3 described here is electric equipment that is electrically driven when imparting the specific function to the air conditioner 2.

For example, in a case where the accessory device 3 is a sensor, the accessory device 3 can impart a function of detecting a specific natural phenomenon or a property of an artifact to the air conditioner 2. The sensor as the accessory device 3 detects, for example, a natural phenomenon, a thermal, mechanical, acoustic, electromagnetic, or chemical property of an artifact, or the like and transmits a signal that can be handled by the air conditioner 2 in place of the detection result. For example, in a case where the accessory device 3 is a remote controller, the accessory device 3 imparts a function of remotely operating the air conditioner 2.

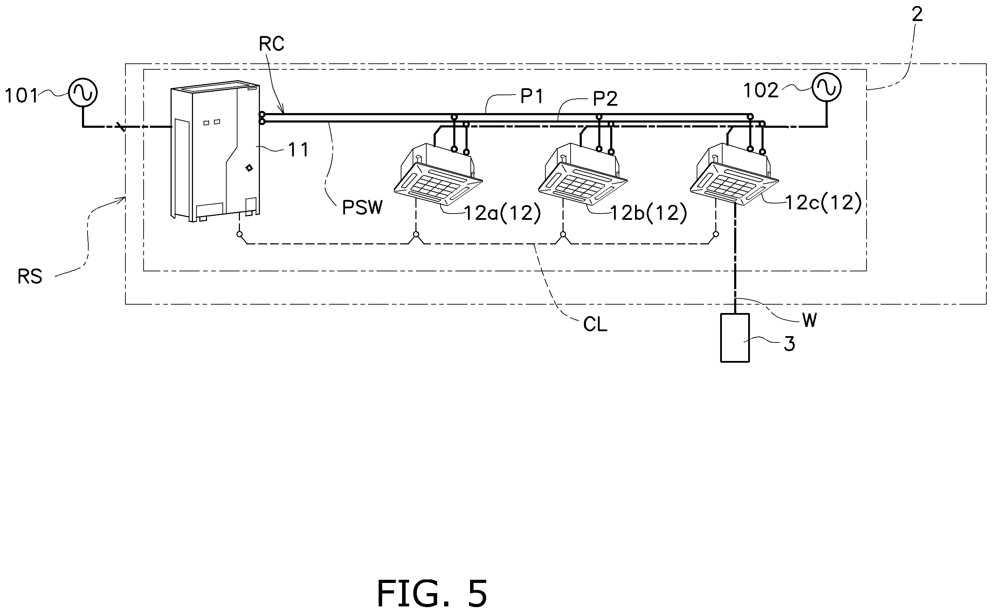

In the air conditioner 2, the outdoor unit 11 is connected to a commercial power source 101 in order to supply power to the outdoor unit 11. Power is supplied to each indoor unit 12 from the commercial power source 101 via the outdoor unit 11 and a power source wiring PSW. In this way, in the air conditioner 2, the commercial power source 101 for driving the outdoor unit 11 and the indoor units 12 is the same system. As shown in FIG. 5, the power source is not required to be the same system and may be the commercial power source 101 for driving the outdoor unit 11 and a commercial power source 102 for driving the indoor unit 12. Power is supplied to the accessory device 3 from the indoor units 12 of the air conditioner 2. The accessory device 3 is electric equipment driven by power supplied from the air conditioner 2.

In the air conditioner 2, the outdoor unit 11, a first indoor unit 12a, a second indoor unit 12b, and a third indoor unit 12c form a refrigerant circuit RC, which together constitute the core of a single refrigerant system RS. The outdoor unit 11, the first indoor unit 12a, the second indoor unit 12b, and the third indoor unit 12c are connected by refrigerant pipes P1 and P2, and the same refrigerant circulates in these outdoor unit 11 and indoor units 12. Here, the refrigerant system RS includes not only the outdoor unit 11, the first indoor unit 12a, the second indoor unit 12b, and the third indoor unit 12c but also the accessory device 3 attached to the air conditioner 2. The refrigerant system RS may include a control device (not shown) that controls the air conditioner 2. Examples of the control device include a centralized controller that controls the outdoor unit 11, the first indoor unit 12a, the second indoor unit 12b, and the third indoor unit 12c.

For example, in a case where there is another air conditioner other than the air conditioner 2, when the same accessory device 3 can be attached to both the air conditioner 2 and the other air conditioner, it is necessary to distinguish whether the accessory device 3 is attached to the air conditioner 2 or the other air conditioner. The air conditioning system 1 performs system recognition to identify a system to which a target air conditioner belongs. This is achieved by distinguishing between a group related to the operation of the air conditioner 2 and a group related to the operation of other air conditioners, treating each group as a separate refrigerant system. The accessory device 3 is included in the refrigerant system RS to which the refrigerant circuit RC of the air conditioner 2 belongs.

The outdoor unit 11 of the air conditioner 2 recognizes that the indoor units 12a, 12b, and 12c belong to the same refrigerant system RS. The outdoor unit 11 can communicate with the indoor units 12a, 12b, and 12c of the same refrigerant system RS by using the power source wiring PSW. In the air conditioner 2, the outdoor unit 11 and the indoor units 12a, 12b, and 12c mutually transmit and receive data by communication, so that the outdoor unit 11 and the indoor units 12a, 12b, and 12c can perform air conditioning related to the refrigerant system RS in cooperation. In the air conditioner 2, the indoor unit 12 and the accessory device 3 mutually transmit and receive data by communication, so that the indoor unit 12 and the accessory device 3 can perform air conditioning related to the refrigerant system RS in cooperation with each other.

Here, a case will be described where the indoor unit 12 of the air conditioner 2 supplies power to the accessory device 3, and the indoor unit 12 and the accessory device 3 perform current loop communication and high frequency communication by using a power supply wiring W. In the present disclosure, a frequency of a signal transmitted by high frequency communication is higher than a frequency of a signal transmitted by current loop communication. The power supply wiring W is a wiring different from the power source wiring PSW that supplies power from the outdoor unit 11 to the indoor unit 12. However, the mode of supplying power from the air conditioner 2 to the accessory device 3 is not limited to the case of supplying power from the indoor unit 12. For example, the outdoor unit 11 may be configured to supply power to the accessory device 3 by using a power supply wiring. In this configuration, the outdoor unit 11 and the accessory device 3 may perform the current loop communication and the high frequency communication by using a power supply wiring connecting the outdoor unit 11 and the accessory device 3.

### (2) Detailed configuration

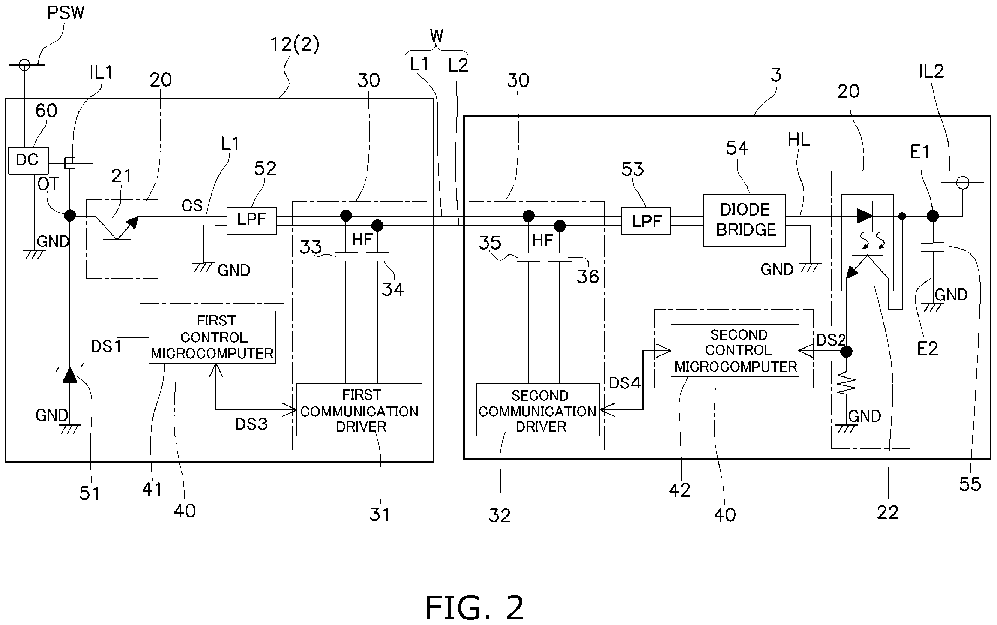

FIG. 2 shows a configuration related to communication between the air conditioner 2 and the accessory device 3. Specifically, FIG. 2 shows a configuration related to communication between the indoor unit 12 of the air conditioner 2 and the accessory device 3.

### (2-1) Indoor unit

As shown in FIG. 2, the indoor unit 12 includes a current loop transmitter 21, a first communication driver 31, a first controller 41, a constant voltage source 51, a low pass filter 52, and capacitors 33 and 34. The indoor unit 12 includes a DC power source 60 connected to the power source wiring PSW and an internal power source line IL1. The DC power source 60 is, for example, a rectifier circuit that generates a DC voltage from the power source wiring PSW. The internal power source line IL1 is a line that is connected to the DC power source 60 and supplies DC power to the inside of the indoor unit 12.

The constant voltage source 51 obtains power from the internal power source line IL1 and generates a constant voltage. The indoor unit 12 shown in FIG. 2 uses a Zener diode as the constant voltage source 51. Although the Zener diode is used as the constant voltage source 51 here, the constant voltage source 51 may be configured by using an element or a circuit other than the Zener diode. A cathode of the Zener diode is connected to an output terminal OT of the constant voltage source 51, and an anode of the Zener diode is connected to a ground GND.

The current loop transmitter 21 is connected between the output terminal OT of the constant voltage source 51 and a first line L1 of the power supply wiring W. The current loop transmitter 21 transmits a current signal CS by changing a state of connecting the output terminal OT of the constant voltage source 51 and the first line L1. The current loop transmitter 21 transmits the current signal CS corresponding to a data signal DS1 provided from the first controller 41. The current loop transmitter 21 constitutes a first communication device 20 together with a current loop receiver 22 to be described later.

The current loop transmitter 21 can be constituted by, for example, a switching element. The switching element transmits the current signal CS by switching between a state in which the output terminal OT of the constant voltage source 51 and the first line L1 are connected and a state in which the output terminal OT is not connected in accordance with the data signal DS1. When the output terminal OT of the constant voltage source 51 is connected to the first line L1, a current flows through the first line L1, and when the output terminal OT of the constant voltage source 51 is not connected to the first line L1, a current does not flow through the first line L1. The digital current signal CS is generated by the state in which the current flows and the state in which the current does not flow (by turning on and off the current). The switching element includes, for example, a transistor. In the transistor used as the switching element, a collector (drain) is connected to the output terminal OT of the constant voltage source 51, and an emitter (source) is connected to the first line L1. The data signal DS1 is provided from the first controller 41 to a base (gate) of the transistor.

The low pass filter 52 is inserted into the first line L1 and a second line L2. The low pass filter 52 is a filter for removing high-frequency noise generated in the first line L1 and the second line L2. The low pass filter 52 can cut off a high frequency signal HF so that the high frequency signal HF provided to the first line L1 and the second line L2 by a second communication device 30 is not transmitted to the constant voltage source 51.

The first communication driver 31 and the capacitors 33 and 34 constitute a first transceiver of the second communication device 30. A second communication driver 32 and capacitors 35 and 36 to be described later constitute a second transceiver of the second communication device 30. In other words, the second communication device 30 includes the first transceiver (the first communication driver 31 and the capacitors 33 and 34) and the second transceiver (the second communication driver 32 and the capacitors 35 and 36). The first communication driver 31 and the capacitors 33 and 34 transmit a voltage signal (high frequency signal HF) by causing a change in voltage between the first line L1 and the second line L2. The first communication driver 31 generates a voltage signal corresponding to a data signal DS3 provided from the first controller 41. The capacitors 33 and 34 have a function of passing the high frequency signal HF and cutting off the current signal CS as a low frequency signal. The first communication driver 31 can transmit the high frequency signal HF through the power supply wiring W via the capacitors 33 and 34.

The first communication driver 31 can receive the high frequency signal HF transmitted through the power supply wiring W via the capacitors 33 and 34. The first communication driver 31 converts the received high frequency signal HF into the data signal DS3 and transmits the data signal DS3 to the first controller 41.

The first controller 41 is implemented by a computer. The first controller 41 includes, for example, a first control microcomputer. The first control microcomputer includes a microcontroller including a control calculator and a storage. A processor such as a CPU or a GPU can be used for the control calculator. The control calculator reads a program stored in the storage, and executes predetermined image processing and calculation processing in accordance with this program. Furthermore, the control calculator can write a calculation result to the storage and read information stored in the storage in accordance with the program.

### (2-2) Accessory device 3

As shown in FIG. 2, the accessory device 3 includes the current loop receiver 22, the second communication driver 32, a second controller 42, a low pass filter 53, the capacitors 35 and 36, a diode bridge 54, and an internal power source 55. In addition, the accessory device 3 includes an internal power source line IL2 for supplying power to the inside.

The internal power source 55 obtains power from the power supply wiring W and generates a constant voltage for driving the accessory device 3. The internal power source 55 includes, for example, a capacitor. When the internal power source 55 is a capacitor, a voltage equal to or lower than a certain voltage generated at the output terminal OT of the constant voltage source 51 is generated at one end of the capacitor. In other words, the capacitor constituting the internal power source 55 accumulates charge supplied through the power supply wiring W until a difference between end-to-end voltages becomes a constant voltage. Although the capacitor is used as the internal power source 55 here, the internal power source 55 may be configured by using an element or a circuit other than the capacitor. One end (one end E1 of the internal power source 55) of the capacitor constituting the internal power source 55 is connected to the internal power source line IL2, and the other end (the other end E2 of the internal power source 55) of the capacitor is connected to the ground.

The current loop receiver 22 is connected between one end E1 of the internal power source 55 and the first line L1 of the power supply wiring W. The current loop receiver 22 receives the current signal CS and converts the current signal CS into the data signal DS3. The current loop receiver 22 transmits the data signal DS3 corresponding to the current signal CS to the second controller 42.

The current loop receiver 22 can be constituted by, for example, a photocoupler. An anode of a photodiode of the photocoupler is connected to the first line L1, and a cathode is connected to one end E1 of the internal power source 55. In the case of the circuit shown in FIG. 2, the cathode of the photodiode of the photocoupler is connected to one end of the capacitor. The photocoupler is used by being connected to, for example, an emitter load. In this case, an emitter of the photocoupler becomes a high voltage when the current signal CS is in an ON state (a state in which the current flows through the first line L1), and becomes a low voltage when the current signal CS is in an OFF state (a state in which the current does not flow through the first line L1).

The low pass filter 53 is inserted into the first line L1 and the second line L2. The low pass filter 53 is a filter for removing high-frequency noise generated in the first line L1 and the second line L2. The low pass filter 53 can cut off a high frequency signal HF so that the high frequency signal HF provided to the first line L1 and the second line L2 by the second communication device 30 is not transmitted to the current loop receiver 22 and the internal power source 55.

The diode bridge 54 is inserted between the low pass filter 53 and the current loop receiver 22. The power supply wiring W is configured such that a potential of the first line L1 is higher than a potential of the second line L2. Therefore, wiring according to the polarities of the first line L1 and the second line L2 of the power supply wiring W is required, such as connecting a high potential side of the power supply wiring W to the current loop receiver 22 and connecting a low potential side of the power supply wiring W to the ground. However, an operator who installs the accessory device 3 may not correctly recognize the polarities of the first line L1 and the second line L2. Therefore, the diode bridge 54 is configured such that one of two terminals on an output side of the diode bridge 54 (a terminal connected to the one end E1 of the internal power source 55) has a high potential and the other one (a terminal connected to the ground) has a low potential regardless of which of the two terminals on an input side of the diode bridge 54 the first line L1 and the second line L2 are connected to. Since the diode bridge 54 is provided, the power supply wiring W is a nonpolarized wiring. In other words, the operator can connect the power supply wiring W to the accessory device 3 without considering the polarities of the first line L1 and the second line L2 of the power supply wiring W.

The second communication driver 32 and the capacitors 35 and 36 constitute the first transceiver of the second communication device 30. The second communication driver 32 and the capacitors 35 and 36 transmit a voltage signal (high frequency signal HF) by causing a change in voltage between the first line L1 and the second line L2. The second communication driver 32 generates a voltage signal corresponding to a data signal DS4 provided from the second controller 42. The capacitors 35 and 36 have a function of passing the high frequency signal HF and cutting off the current signal CS as a low frequency signal. The second communication driver 32 can transmit the high frequency signal HF through the power supply wiring W via the capacitors 35 and 36.

The second communication driver 32 can receive the high frequency signal HF transmitted through the power supply wiring W via the capacitors 35 and 36. The second communication driver 32 converts the received high frequency signal HF into the data signal DS4 and transmits the data signal DS4 to the second controller 42.

The second controller 42 is implemented by a computer. The second controller 42 includes, for example, a second control microcomputer. The second control microcomputer includes a microcontroller including a control calculator and a storage. A processor such as a CPU or a GPU can be used for the control calculator. The control calculator reads a program stored in the storage, and executes predetermined image processing and calculation processing in accordance with this program. Furthermore, the control calculator can write a calculation result to the storage and read information stored in the storage in accordance with the program.

### (3) Overall operation

In the air conditioner 2, for example, the outdoor unit 11 includes a compressor (not shown), a first heat exchanger (not shown), and an expansion valve (not shown) constituting the refrigerant circuit RC, and the indoor unit 12 includes a second heat exchanger (not shown) constituting the refrigerant circuit RC. In the air conditioner 2 configured to perform a cooling operation, for example, the refrigerant passes through the compressor, the first heat exchanger, the expansion valve, and the second heat exchanger in the refrigerant circuit RC and returns to the compressor. The refrigerant circuit RC achieves a vapor compression refrigeration cycle. In this case, the refrigerant in a gas state is compressed by the compressor and discharged. In the first heat exchanger, the compressed high-temperature and high-pressure refrigerant exchanges heat with outdoor air to dissipate heat. At the expansion valve, the refrigerant having dissipated heat is decompressed and expanded. In the second heat exchanger of the indoor unit 12, the decompressed and expanded refrigerant exchanges heat with indoor air to absorb heat. At this time, cooling is performed by the indoor air cooled by heat exchange with the refrigerant. In the compressor, the refrigerant that has absorbed heat and gasified is compressed and discharged again to the first heat exchanger.

In the air conditioner 2 configured to perform a heating operation, for example, the refrigerant passes through the compressor, the second heat exchanger, the expansion valve, and the first heat exchanger in the refrigerant circuit RC and returns to the compressor. The refrigerant circuit RC achieves a vapor compression refrigeration cycle. In this case, the refrigerant in a gas state is compressed by the compressor and discharged. In the second heat exchanger of the indoor unit 12, the compressed high-temperature and high-pressure refrigerant exchanges heat with the indoor air to dissipate heat. At this time, heating is performed by the indoor air heated by heat exchange with the refrigerant. At the expansion valve, the refrigerant having dissipated heat is decompressed and expanded. In the first heat exchanger, the decompressed and expanded refrigerant exchanges heat with outdoor air to absorb heat. In the compressor, the refrigerant that has absorbed heat and gasified is compressed and discharged again to the second heat exchanger.

The air conditioner 2 may include a four-way valve that switches a circulation direction of the refrigerant in the refrigerant circuit RC so as to perform both the cooling operation and the heating operation.

### (4) Detailed operation related to communication between air conditioner 2 and accessory device 3

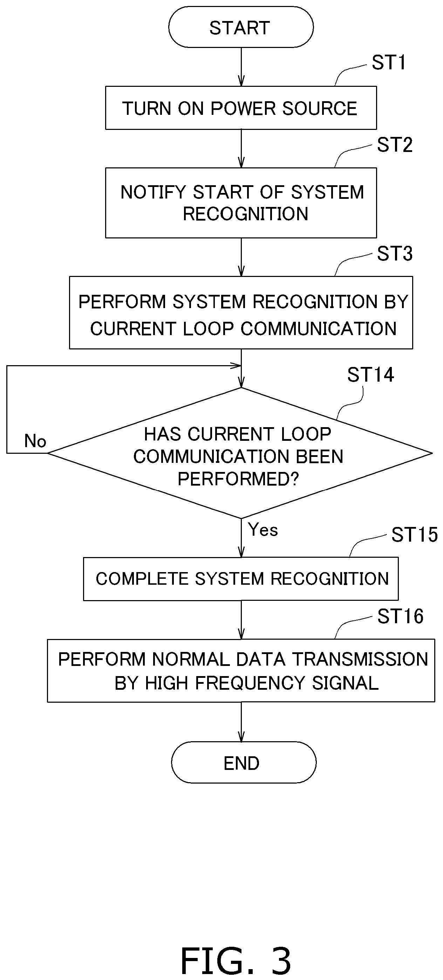

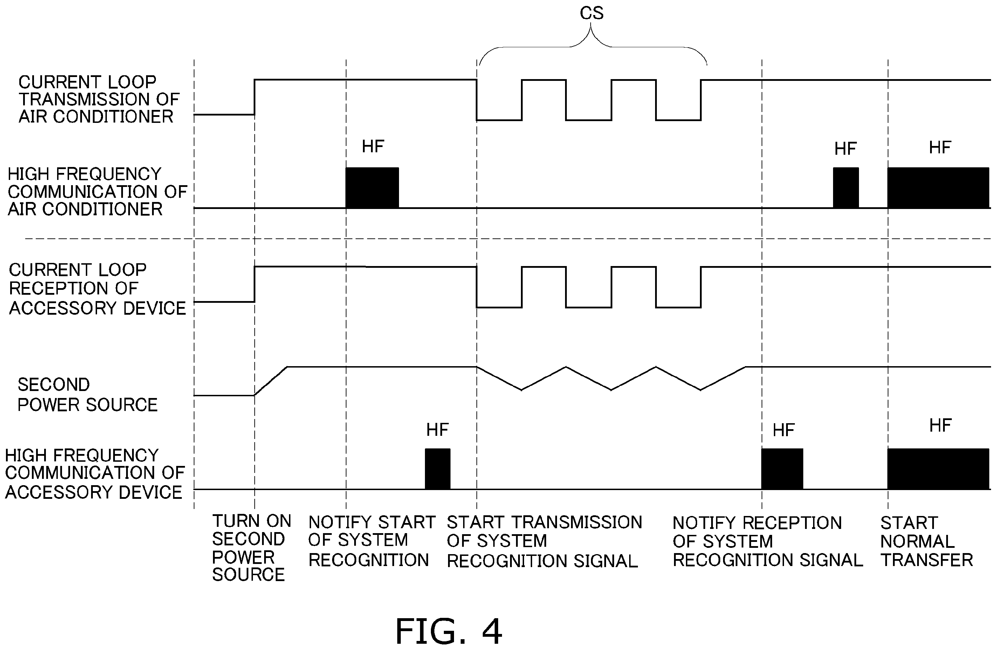

An operation related to communication between the air conditioner 2 and the accessory device 3 will be described with reference to FIGS. 3 and 4. In order to drive the accessory device 3, the power source of the accessory device 3 is turned on (step ST1). When the power source is turned on, a current flows through the power supply wiring W, and power is applied to the internal power source 55 of the accessory device 3. When the internal power source 55 is a capacitor, charges are accumulated in the capacitor through the first line L1 and the second line L2.

When a sufficient time elapses until the internal power source 55 can supply power to the inside of the accessory device 3 after the power source of the accessory device 3 is turned on, the first controller 41 outputs the data signal DS3 to the first communication driver 31 in order to cause the first communication driver 31 to transmit the high frequency signal HF for starting system recognition (step ST2). The first communication driver 31 transmits the high frequency signal HF through the capacitors 33 and 34 and the power supply wiring W. The high frequency signal HF transmitted at this time includes, for example, information for specifying the indoor unit 12.

When the first communication driver 31 communicates the high frequency signal HF, the second communication driver 32 and the second controller 42 are in an operable state by receiving power supplied from the internal power source 55. Therefore, the second communication driver 32 receives the high frequency signal HF transmitted by the first communication driver 31, and transmits the data signal DS4 to the second controller 42.

The second controller 42 receives the data signal DS4 to obtain information indicating that there has been a notification to start system recognition. The second controller 42 which has obtained information that there has been a notification to start system recognition transmits the data signal DS4 to the second communication driver 32 in order to transmit, to the first controller 41, the high frequency signal HF for indicating that the start of system recognition has been accepted. The second communication driver 32 which has received the data signal DS4 transmits the high frequency signal HF through the capacitors 35 and 36 and the power supply wiring W. The high frequency signal HF transmitted at this time includes, for example, information for specifying the accessory device 3.

The first communication driver 31 which has received the high frequency signal HF transmitted by the second communication driver 32 transmits the data signal DS1 to the first controller 41. After transmitting the data signal DS3 for transmitting the high frequency signal HF to the first communication driver 31, the first controller 41 receives the data signal DS3 from the first communication driver 31 to learn that the system recognition is ready to start.

The first controller 41 which has learned that the system recognition is ready to start performs system recognition by current loop communication (step ST3). The first controller 41 transmits the data signal DS1 to the current loop transmitter 21 and causes the current loop transmitter 21 to transmit the current signal CS. Upon receiving the current signal CS, the current loop receiver 22 of the accessory device 3 transmits the data signal DS2 to the second controller 42. After causing the second communication driver 32 to transmit the high frequency signal HF, the second controller 42 receives the data signal D2 from the current loop receiver 22, and learns that the indoor unit 12 is to recognize that the accessory device 3 belongs to the same refrigerant system RS. The accessory device 3 which has learned that the accessory device 3 belongs to the refrigerant system RS transmits the data signal DS4 to the second communication driver to cause the second communication driver 32 to transmit the high frequency signal HF in order to notify the indoor unit 12 that the accessory device 3 belongs to the same refrigerant system RS. The second controller 42 transmits the high frequency signal HF to notify the first controller 41 that the current signal CS for system recognition has been received.

Upon receiving the high frequency signal HF transmitted by the second communication driver 32, the first communication driver 31 transmits, to the first controller 41, the data signal DS3 notifying reception of the high frequency signal HF. After causing the current loop transmitter 21 to transmit the current signal CS, the first controller 41 learns that the high frequency signal HF has been received, to learn that the accessory device 3 has received the current signal CS for system recognition. As described above, the current signal CS and the transmission and reception of the high frequency signal HF are transmitted and received through the power supply wiring W between the indoor unit 12 and the accessory device 3, and thus, the recognition of the refrigerant system for confirming that the indoor unit 12 and the accessory device 3 belong to the refrigerant system RS is completed (step ST15).

When the recognition of the refrigerant system is completed, normal data transfer by the high frequency signal HF via the power supply wiring W is started between the indoor unit 12 and the accessory device 3 (step ST16).

As described above, the controller 40 configures a communication network by sequentially causing the second communication device 30 to perform transmission and reception, the first communication device 20 to perform transmission and reception, and the second communication device 30 to perform transmission and reception between the air conditioner 2 and the accessory device 3, thereby determining that the accessory device 3 is connected. In other words, the controller 40 performs system recognition by sequentially performing transmission and reception by the second communication device 30, transmission and reception by the first communication device 20, and transmission and reception by the second communication device 30 between the air conditioner 2 and the accessory device 3. The controller 40 determines that the accessory device 3 is connected to the refrigerant system RS on the basis of the system recognition.

### (5) Current loop communication and high frequency communication

The current loop communication of the first communication device 20 shown in FIG. 4 is performed by turning on and off the current flowing through the power supply wiring W. In a case where the internal power source 55 is a capacitor, when the current flowing through the power supply wiring W is turned off, the charge accumulated in the capacitor decreases, and the voltage decreases. The accessory device 3 is configured to operate even when the voltage of the internal power source 55 is temporarily lowered by the current loop communication. As described above, communication is performed by turning on and off the current flowing through the power supply wiring W, so that the current loop transmitter 21 can be constituted by the switching element, and the configuration of the current loop transmitter 21 is simplified.

The frequency of the voltage signal (high frequency signal HF) used by the second communication device 30 for communication is higher than the frequency of the current signal CS used by the first communication device 20 for current loop communication. Therefore, the air conditioning system 1 can perform communication in which crosstalk is less likely to occur by using the current signal CS of the first communication device 20 having a low frequency than by using the second communication device 30. In addition, by using the high frequency signal HF of the second communication device 30 higher than the frequency of the current signal CS of the current loop communication for data transfer, the air conditioning system 1 can transfer more data faster than when data is transferred by using the first communication device 20.

For example, if the accessory device 3 is an outdoor temperature sensor, the accessory device 3 can detect an outdoor air temperature, transmit a detection result from the second communication driver 32, and cause the first communication driver 31 of the indoor unit 12 to receive the detection result. In this case, the air conditioning system 1 can perform air conditioning by using the detection result of the outdoor air temperature detected by the accessory device 3. For example, if the accessory device 3 is a human detection sensor, the accessory device 3 can detect the presence or absence of a human in an air conditioning target space, transmit a detection result from the second communication driver 32, and cause the first communication driver 31 of the indoor unit 12 to receive the detection result. In this case, the air conditioning system 1 can perform air conditioning by distinguishing a case where a person is present in the air conditioning target space from a case where a person is not present in the air conditioning target space by using the detection result of human detection by the accessory device 3. For example, when the accessory device 3 is a wireless receiver, an instruction from a user can be received wirelessly, the received instruction can be transmitted from the second communication driver 32, and the first communication driver 31 of the indoor unit 12 can receive the instruction. In this case, the air conditioning system 1 can perform air conditioning by using communication data of wireless communication by the accessory device 3. For example, when accessory device 3 is a display device, data required for display can be transmitted from the first communication driver 31 and received by the second communication driver 32. In this case, the air conditioning system 1 can cause the accessory device 3 to display data related to air conditioning transmitted to the accessory device 3.

### (6) Modifications

### (6-1) Modification 1A

In the above embodiment, a case has been described where the air conditioning system 1 includes one refrigerant system RS, and one refrigerant system RS includes only a plurality of indoor units 12. However, the mode of the air conditioning system 1 is not limited to the above-described mode. For example, the air conditioning system 1 may include a plurality of refrigerant systems, and each of the refrigerant systems may include an outdoor unit and an indoor unit. The air conditioning system 1 may be configured such that one refrigerant system includes a plurality of outdoor units.

### (6-2) Modification 1B

In the above embodiment, a case has been described where one accessory device 3 is connected to the air conditioner 2 of one refrigerant system RS. However, a plurality of the accessory devices 3 may be connected to the air conditioner 2 of one refrigerant system RS. For example, the accessory device 3 may be connected to each of the indoor units 12a, 12b, and 12c, and a total of three accessory devices 3 may be connected to the air conditioning system 1.

### (6-3) Modification 1C

In the air conditioning system 1, a case has been described where the indoor unit 12 and the accessory device 3 communicate with each other. However, the configuration in which the accessory device 3 communicates in the same refrigerant system is not limited to the configuration in which the accessory device 3 communicates only with the indoor unit 12. For example, the outdoor unit 11 and the accessory device 3, or the outdoor unit 11, the indoor unit 12, and the accessory device 3 may be communicable with each other via the indoor unit 12. When a plurality of accessory devices 3 is included in one refrigerant system, the accessory devices 3 may be indirectly communicable with each other through the indoor unit 12.

### (6-4) Modification 1D

The power for driving the indoor unit 12 may be supplied from other than the outdoor unit 11. For example, as shown in FIG. 5, the power for driving the indoor unit 12 may be supplied from the commercial power source 102 different from the commercial power source 101.

### (6-5) Modification 1E

In the air conditioning system 1, the communication performed between the outdoor unit 11 and the indoor unit 12 in one refrigerant system RS is not limited to communication performed through the power source wiring PSW. For example, as shown in FIG. 5, the outdoor unit 11 and the indoor unit 12 may be communicable with each other by using a communication wiring CL other than the power source wiring PSW. The communication using the communication wiring CL is, for example, communication by a voltage signal. The communication performed by the communication wiring CL may also be configured to selectively use two types of signals, a low frequency signal and a high frequency signal. When the accessory device 3 and the indoor unit 12 are connected by the power supply wiring W, the outdoor unit 11 belonging to the same refrigerant system RS and the accessory device 3 may be also configured to indirectly communicate with each other via the indoor unit 12 by using the communication wiring CL. When the accessory device 3 and the outdoor unit 11 are connected by the power supply wiring, the outdoor unit 11 belonging to the same refrigerant system RS and the accessory device 3 may be also configured to indirectly communicate with each other via the indoor unit 12 by using the communication wiring CL.

### (6-6) Modification 1F

In the above embodiment, a case has been described where transmission and reception by the current loop communication can be performed by using the current loop transmitter 21 and the current loop receiver 22 constituting the first communication device 20. However, a current loop transceiver capable of transmission and reception may be used instead of the current loop receiver 22 of the indoor unit 12, and a current loop transceiver capable of transmission and reception may be used instead of the current loop transmitter 21 of the indoor unit 12.

### (7) Characteristics

(7-1)
   The air conditioning system 1 according to the above embodiment includes the air conditioner 2 and the accessory device 3 driven by power supplied from the air conditioner 2. In the air conditioning system 1, the controller 40 uses the current loop communication of the first communication device 20 for recognition of the accessory device 3, and uses the voltage signal (high frequency signal HF) of the second communication device 30 for data communication. Both the current loop communication (communication using the current signal CS) and the communication using the voltage signal (high frequency signal HF) are performed by using the power supply wiring W. The power supply wiring W is a wire that supplies power from the air conditioner 2 to the accessory device 3. In such an air conditioning system 1, as compared with a case where device recognition and data communication are performed only by the current loop communication, the components of the accessory device 3 can be easily downsized, and the accessory device 3 can be easily downsized. In addition, by using the second communication device 30, downsizing is facilitated, and data transfer time can be shortened.
(7-2)
   In the current loop communication of the first communication device 20, communication is performed by the current loop transmitter 21 turning on and off the current flowing through the power supply wiring W. In such a configuration, for example, a switching element can be used for the current loop transmitter 21. In a case where the switching element is used for the current loop transmitter 21, the configuration of the current loop transmitter 21 can be simplified by using a transistor as the switching element.
(7-3)
   The frequency of the high frequency signal HF used by the second communication device 30 for communication is higher than the frequency of the current signal CS used by the first communication device 20 for current loop communication. The air conditioning system 1 can perform communication in which crosstalk is less likely to occur by using the current signal CS of the first communication device 20 having a low frequency than by using the second communication device 30. By using the first communication device 20 for system recognition, the air conditioning system 1 can maintain high reliability of the system recognition. On the other hand, by using the second communication device 30 using the high frequency signal HF having a frequency higher than the frequency of the current signal CS of the current loop communication for data transfer, the air conditioning system 1 can transfer more data faster than when data is transferred by using the first communication device 20.
(7-4)
   In the air conditioning system 1 according to the above embodiment, the controller 40 configures a communication network by determining the connection of the accessory device 3 using the current loop communication. The air conditioning system 1 performs data communication using a voltage signal after configuring the communication network. As a result, the air conditioning system 1 can reliably utilize the communication of the accessory device 3 for the operation of the refrigerant system RS.
(7-5)
   The controller 40 sequentially causes the second communication device 30 to perform transmission and reception, the first communication device 20 to perform transmission and reception, and the second communication device 30 to perform transmission and reception between the air conditioner 2 and the accessory device 3, and determines that the accessory device 3 is connected. During the configuration of the communication network, the transmission and reception of voltage signals occur before and after the current loop communication. Therefore, compared to the case where only one of either current loop communication or voltage signal communication is conducted, the determination of the connection of the accessory device 3 can be reliably performed in a shorter time.
(7-6)
   The power supply wiring W of the air conditioning system 1 according to the above embodiment is a nonpolarized wiring. Therefore, since it is not necessary to specify the polarity when the power supply wiring W is connected to the accessory device 3 on site, the power supply wiring W can be smoothly connected.

The embodiments of the present invention have been described above. It will be understood that various changes to modes and details can be made without departing from the scope of the present invention recited in the claims.

### REFERENCE SIGNS LIST

1: air conditioning system
2: air conditioner
3: accessory device
20: first communication device
30: second communication device
40: controller
W: power supply wiring

### CITATIONS LIST

### PATENT LITERATURE

Patent Literature 1: JP 2020-167578 A

## Claims

1. An air conditioning system (1) comprising:
an air conditioner (2);
an accessory device (3) driven by power supplied from the air conditioner;
a power supply wiring (W) that is configured to supply power from the air conditioner to the accessory device;
a first communication device (20) that is configured to change a current flowing through the power supply wiring and perform current loop communication between the air conditioner and the accessory device (3);
a second communication device (30) that is configured to superimpose a voltage signal on the power supply wiring and perform communication between the air conditioner and the accessory device (3); and
a controller (40) that is configured to control the first communication device and the second communication device.

2. The air conditioning system (1) according to claim 1, wherein the current loop communication of the first communication device (20) is performed by turning on and off the current flowing through the power supply wiring (W).

3. The air conditioning system (1) according to claim 1 or 2, wherein a frequency of the voltage signal of the second communication device (30) is higher than a frequency of the current loop communication of the first communication device (20).

4. The air conditioning system (1) according to any one of claims 1 to 3, wherein the controller is configured to configure a communication network by determining, using the current loop communication, that the accessory device (3) is connected, and perform data communication by the voltage signal after the configuration of the communication network.

5. The air conditioning system (1) according to claim 4, wherein, by sequentially causing the second communication device (30) to perform transmission and reception, the first communication device (20) to perform transmission and reception, and the second communication device (30) to perform transmission and reception between the air conditioner (2) and the accessory device (3), the controller (40) is configured to determine that the accessory device (3) is connected, and to configure the communication network.

6. The air conditioning system (1) according to any one of claims 1 to 5, wherein the power supply wiring (W) is a nonpolarized wiring.

## Patentansprüche

1. Klimaanlagensystem (1), umfassend:
eine Klimaanlage (2);
eine Zusatzvorrichtung (3), die durch Strom angetrieben wird, die von der Klimaanlage geliefert wird;
eine Stromversorgungsverkabelung (W), die so ausgebildet ist, dass sie Strom von der Klimaanlage an die Zusatzvorrichtung liefert;
eine erste Kommunikationsvorrichtung (20), die so konfiguriert ist, dass sie einen durch die Stromversorgungsverkabelung fließenden Strom verändert und Stromschleifenkommunikation zwischen der Klimaanlage und der Zusatzvorrichtung (3) durchführt;
eine zweite Kommunikationsvorrichtung (30), die so konfiguriert ist, dass sie ein Spannungssignal auf die Stromversorgungsverkabelung überlagert und Kommunikation zwischen der Klimaanlage und der Zusatzvorrichtung (3) durchführt; und
eine Steuereinheit (40), die so konfiguriert ist, dass sie die erste Kommunikationsvorrichtung und die zweite Kommunikationsvorrichtung steuert.

2. Klimaanlagensystem (1) nach Anspruch 1, wobei die Stromschleifenkommunikation der ersten Kommunikationsvorrichtung (20) durch Ein- und Ausschalten des durch die Stromversorgungsverkabelung (W) fließenden Stroms durchgeführt wird.

3. Klimaanlagensystem (1) nach Anspruch 1 oder 2, wobei eine Frequenz des Spannungssignals der zweiten Kommunikationsvorrichtung (30) höher ist als eine Frequenz der Stromschleifenkommunikation der ersten Kommunikationsvorrichtung (20).

4. Klimaanlagensystem (1) nach einem der Ansprüche 1 bis 3, wobei die Steuereinheit so konfiguriert ist, dass sie durch Bestimmen, unter Verwendung der Stromschleifenkommunikation, dass die Zusatzvorrichtung (3) verbunden ist, ein Kommunikationsnetzwerk konfiguriert und nach der Konfiguration des Kommunikationsnetzwerks Datenkommunikation durch das Spannungssignal durchführt.

5. Klimaanlagensystem (1) nach Anspruch 4, wobei durch sequenzielles Bewirken, dass die zweite Kommunikationsvorrichtung (30) Übertragung und Empfang durchführt, die erste Kommunikationsvorrichtung (20) Übertragung und Empfang durchführt und die zweite Kommunikationsvorrichtung (30) Übertragung und Empfang zwischen der Klimaanlage (2) und der Zusatzvorrichtung (3) durchführt, wobei die Steuereinheit (40) so konfiguriert ist, dass sie bestimmt, dass die Zusatzvorrichtung (3) verbunden ist, und das Kommunikationsnetzwerk konfiguriert.

6. Klimaanlagensystem (1) nach einem der Ansprüche 1 bis 5, wobei die Stromversorgungsverkabelung (W) eine nichtpolarisierte Verkabelung ist.

## Revendications

1. Système de climatisation (1) comprenant :
un climatiseur (2) ;
un dispositif accessoire (3) entraîné par l'énergie alimentée à partir du climatiseur ;
un câblage d'alimentation électrique (W) qui est conçu pour alimenter en énergie le dispositif accessoire à partir du climatiseur ;
un premier dispositif de communication (20) qui est conçu pour modifier un courant circulant dans le câblage d'alimentation électrique et effectuer une communication en boucle de courant entre le climatiseur et le dispositif accessoire (3) ;
un second dispositif de communication (30) qui est conçu pour superposer un signal de tension sur le câblage d'alimentation électrique et effectuer une communication entre le climatiseur et le dispositif accessoire (3) ; et
un moyen de commande (40) qui est conçu pour commander le premier dispositif de communication et le second dispositif de communication.

2. Système de climatisation (1) selon la revendication 1, dans lequel la communication en boucle de courant du premier dispositif de communication (20) est effectuée en activant et en désactivant le courant circulant dans le câblage d'alimentation électrique (W).

3. Système de climatisation (1) selon la revendication 1 ou la revendication 2, dans lequel une fréquence du signal de tension du second dispositif de communication (30) est supérieure à une fréquence de la communication en boucle de courant du premier dispositif de communication (20).

4. Système de climatisation (1) selon l'une quelconque des revendications 1 à 3, dans lequel le moyen de commande est conçu pour configurer un réseau de communication en déterminant, à l'aide de la communication en boucle de courant, que le dispositif accessoire (3) est connecté, et pour effectuer une communication de données par le signal de tension après la configuration du réseau de communication.

5. Système de climatisation (1) selon la revendication 4, dans lequel, en amenant séquentiellement le second dispositif de communication (30) à effectuer une transmission et une réception, le premier dispositif de communication (20) à effectuer une transmission et une réception, et le second dispositif de communication (30) à effectuer une transmission et une réception entre le climatiseur (2) et le dispositif accessoire (3), le moyen de commande (40) est conçu pour déterminer que le dispositif accessoire (3) est connecté et pour configurer le réseau de communication.

6. Système de climatisation (1) selon l'une quelconque des revendications 1 à 5, dans lequel le câblage d'alimentation électrique (W) est un câblage non polarisé.
